# EUROPÄISCHE PATENTSCHRIFT

(11) **EP 0 670 258 B1**
(45) Veröffentlichungstag und Bekanntmachung des Hinweises auf die Patenterteilung: **16.04.1997**
(21) Anmeldenummer: 95102248.2
(22) Anmeldetag: 18.02.1995
(51) Int. Cl.: B62D 61/12, B60G 11/28

(54) **Achslift für luftgefederte Fahrzeugachsen**
Axle lift for pneumatically suspended vehicle axles
Dispositif de levage pour essieux des véhicules à suspension pneumatique

(30) Priorität: 05.03.1994 DE 4407398
(43) Veröffentlichungstag der Anmeldung: 06.09.1995
(73) Patentinhaber: BPW Bergische Achsen Kommanditgesellschaft, 51674 Wiehl (DE)
(72) Erfinder: Steiner, Helmut, Dipl.-Ing., D-51674 Wiehl (DE); Kopplow, Hans-Werner, Dipl.-Ing., D-51588 Nümbrecht (DE)
(74) Vertreter: Stenger, Watzke & Ring Patentanwälte

(56) Entgegenhaltungen:
- GB-A- 2 262 722
- US-A- 4 165 792

## Beschreibung

Die Erfindung betrifft einen Achslift für luftgefederte Fahrzeugachsen, deren Achskörper an Zwei Längslenkern befestigt ist, deren eines Ende, vorzugsweise über jeweils eine Konsole verschwenkbar am Fahrzeugrahmen angelenkt und deren anderes Ende über eine Luftfeder mit dem Fahrzeugrahmen verbunden ist, mit mindestens einer zusätzlichen Luftfeder, durch deren Beaufschlagen mit Druckluft bei gleichzeitiger Entlüftung der beiden den Achskörper am Fahrzeugrahmen abstützenden Luftfedern der Achskörper anhebbar ist.

Ein Achslift gemäß dem Oberbegriff des Anspruchs 1 ist aus der Schrift GB-A-2 262 722 bekannt.

Derartige Achslifte für luftgefederte Fahrzeugachsen sind bei Lastzügen, insbesondere Sattelzügen bekannt, wobei entweder die vordere oder die hintere Achse eines zwei- oder dreiachsigen Achsaggregates angehoben wird, wenn das Fahrzeug nicht oder nur teilweise beladen ist.

Bei einer bekannten Konstruktion eines eingangs beschriebenen Achsliftes ist eine zusätzliche Luftfeder in der Längsmitte des Achskörpers zwischen einem an der Oberseite des Achskörpers befestigten und einem an einem Querträger des Fahrzeugrahmens befestigten Kragarm angeordnet. Durch Beaufschlagen dieser zusätzlichen Luftfeder mit Druckluft wird bei gleichzeitiger Entlüftung der beiden den Achskörper am Fahrzeugrahmen abstützenden Luftfedern der Achskörper angehoben. Diese bekannte Konstruktion hat jedoch den Nachteil, daß der an der Oberseite der zusätzlichen Luftfeder angreifende Kragarm des Achskörpers und der an der Unterseite der zusätzlichen Luftfeder angreifende Kragarm des Fahrzeugrahmens mit Biegekräften belastet werden, die Torsionsmomente sowohl auf den Achskörper und seine Lagerelemente als auch auf den Querträger des Fahrzeugrahmens ausüben.

Bei einem weiteren bekannten Achslift der eingangs beschriebenen Art sind zwei zusätzliche Luftfedern angeordnet, die mit ihrer Oberseite am Fahrzeugrahmen und mit ihrer Unterseite an einem zweiarmigen Hebel befestigt sind, der verschwenkbar an den die Längslenker der Luftfederachse lagernden Konsolen gelagert ist und mit seinem freien Ende jeweils auf einen Längslenker einwirkt, wenn die zusätzlichen Luftfedern mit Druckluft beaufschlagt werden. Diese bekannte Konstruktion ist nicht nur aufwendig, sondern beansprucht darüber hinaus einen erheblichen Raum im Bereich der Achsaufhängungen.

Der Erfindung liegt die **Aufgabe** zugrunde, einen Achslift der eingangs beschriebenen Art für luftgefederte Fahrzeugachsen mit geringem Raumbedarf und niedrigem Gewicht zu schaffen, der die Einleitung schädlicher Kräfte und Momente in den Fahrzeugrahmen sowie in die Achse und deren Aufhängung vermeidet.

Die **Lösung** dieser Aufgabenstellung durch die Erfindung ist dadurch gekennzeichnet, daß die zusätzliche Luftfeder mit ihrer Oberseite über mindestens einen Bügel gelenkig mit dem Achskörper und mit ihrer Unterseite über mindestens einen Bügel gelenkig mit dem Fahrzeugrahmen verbindbar ist.

Unabhängig davon, ob nur eine zusätzliche Luftfeder im Bereich der Längsmitte des Achskörpers oder zwei zusätzliche Luftfedern, jeweils im Bereich der Achsaufhängung angeordnet werden, ergibt sich eine kostengünstige und raumsparende Konstruktion des erfindungsgemäßen Achsliftes, da außer der zusätzlichen Luftfeder lediglich zwei die zusätzliche Luftfeder umgebende Bügel angeordnet werden müssen, die im wesentlichen auf Zug belastet werden und deshalb mit geringem Querschnitt und damit Gewicht ausgeführt werden können. Da der erfindungsgemäße Achslift außer der zusätzlichen Luftfeder und mindestens zwei Bügeln lediglich zwei Anlenkungen dieser Bügel einerseits am Achskörper und andererseits am Fahrzeugrahmen umfaßt, ergibt sich insgesamt eine Achsliftkonstruktion mit geringem Raumbedarf und niedrigem Gewicht, die zudem preiswert hergestellt werden kann.

Um ein Ausknicken der relativ zueinander in Längsrichtung der Luftfeder beweglichen Bügel, insbesondere durch Verschwenken um ihre Anlenkungen am Fahrzeugrahmen bzw. Achskörper zu verhindern, sind diese gemäß einem weiteren Merkmal der Erfindung parallel zueinander geführt.

Bei einer bevorzugten Ausführungsform der Erfindung sind jeweils zwei einander gegenüberliegende, an der Oberseite bzw. Unterseite der zusätzlichen Luftfeder angreifende und sich kreuzende Bügel angeordnet. Hierdurch ergibt sich eine besonders günstige Kraftverteilung.

Jeder an der Oberseite der zusätzlichen Luftfeder angreifende Bügel ist gemäß einem weiteren Merkmal der Erfindung mittels eines parallel zum Achskörper verlaufenden Schraubenbolzens verschwenkbar mit einem Halter verbunden, der am Achskörper befestigt ist. Hierdurch ergibt sich eine besonders einfache Konstruktion, die erfindungsgemäß dadurch weitergebildet werden kann, daß der Halter mittels eines U-förmigen Schraubenbügels am Achskörper angeschraubt wird, wie er als Federbügel Verwendung findet.

Gemäß einem weiteren Merkmal der Erfindung kann jeder an der Unterseite der zusätzlichen Luftfeder angreifende Bügel mittels eines parallel zum Achskörper verlaufenden Schraubenbolzens verschwenkbar am Fahrzeugrahmen gelagert werden, wobei es für diese Lagerung unterschiedliche Ausführungsmöglichkeiten gibt. Bei einer bevorzugten Ausführung ist der Schraubenbolzen an einem Kragarm angeordnet, der seinerseits an einem Querträger im Bereich der die Längslenker lagernden Konsolen des Fahrzeugrahmens befestigt ist. Bei einer alternativen Ausführungsform ist der Schraubenbolzen über ein Lagerstück unmittelbar an einem im Bereich der Längsträger des Fahrzeugrahmens verlaufenden Querträger angeordnet. Schließlich ist es möglich, den Schraubenbolzen über ein Lagerstück im Bereich des Fahrzeugbodens am Fahrzeugrahmen anzuordnen.

Eine besonders raumsparende und von der Achsaufhängung der Luftfederachse unabhängige Ausbildung ergibt sich, wenn nur eine zusätzliche Luftfeder zwischen den Längslenkern des Achskörpers angeordnet wird.

Bei einer bevorzugten Ausführungsform des erfindungsgemäßen Achsliftes wird die zusätzliche Luftfeder mit einem Zweifaltenbalg ausgeführt.

Auf der Zeichnung sind drei Ausführungsbeispiele des erfindungsgemäßen Achsliftes dargestellt, und zwar zeigen:
- Fig. 1: eine Seitenansicht einer Luftfederachse mit einer ersten Ausführungsform eines in Fahrstellung befindlichen Achsliftes,
- Fig. 2: eine Draufsicht auf die Luftfederachse gemäß Fig. 1,
- Fig. 3: eine Seitenansicht der Luftfederachse nach Fig. 1, jedoch in ausgefederter Stellung,
- Fig. 4: eine weitere Seitenansicht der Luftfederachse nach Fig. 1, jedoch in angehobener Stellung,
- Fig. 5: eine Seitenansicht einer Luftfederachse gemäß Fig. 1 mit einer zweiten Ausführungsform eines Achsliftes und
- Fig. 6: eine Seitenansicht einer Luftfederachse nach Fig. 1 mit einer dritten Ausführungsform eines Achsliftes.

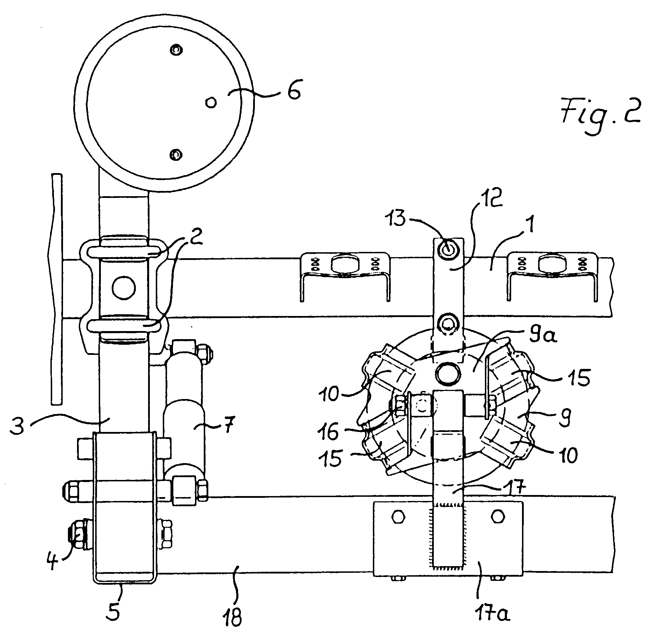

Die bei allen drei Ausführungsbeispielen dargestellte luftgefederte Fahrzeugachse umfaßt einen Achskörper 1, der im Bereich seiner beiden Enden jeweils mittels zweier Schraubenbügel 2 (siehe Fig. 2) an einem Längslenker 3 befestigt ist. Jeder der beiden Längslenker 3 ist an seinem vorn liegenden Ende mittels eines Lagerbolzens 4 an einer Konsole 5 verschwenkbar gelagert, die ihrerseits mit dem Fahrzeugrahmen verbunden ist.

An seinem hinteren Ende ist jeder Längslenker 3 über eine Luftfeder 6 am Fahrzeugrahmen abgestützt. Außerdem ist zwischen dem Fahrzeugrahmen und jedem Längslenker 3 ein Stoßdämpfer 7 angeordnet. Vom Fahrzeugrahmen ist in den Zeichnungen jeweils ein Längsträger 8 zu erkennen.

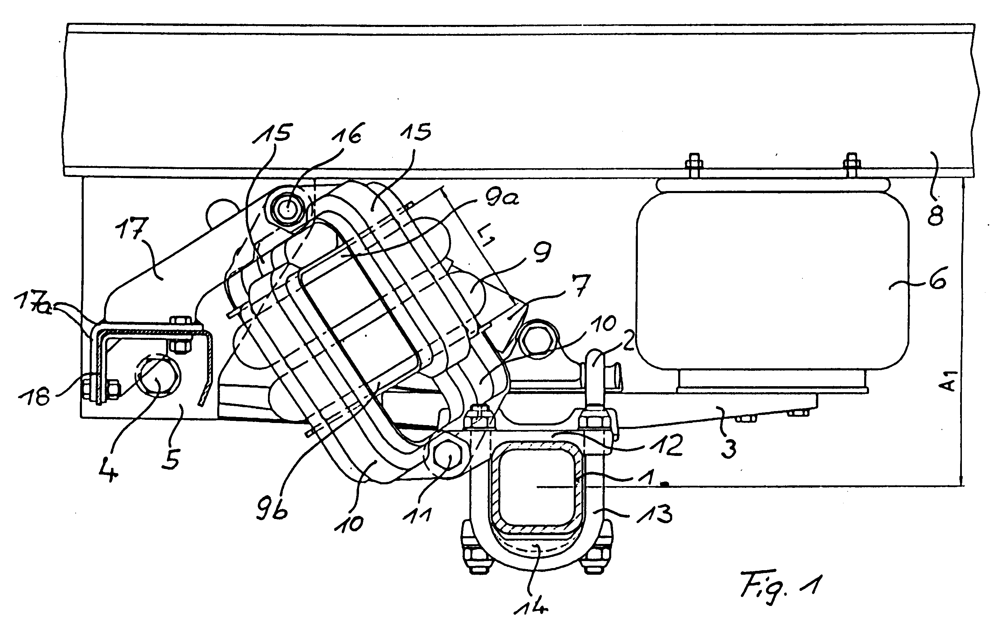

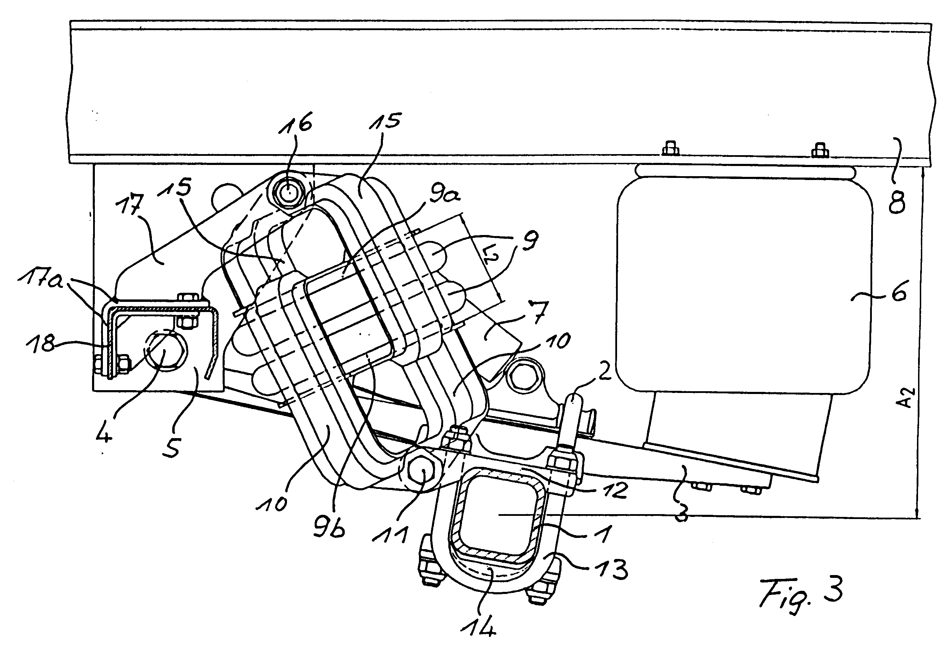

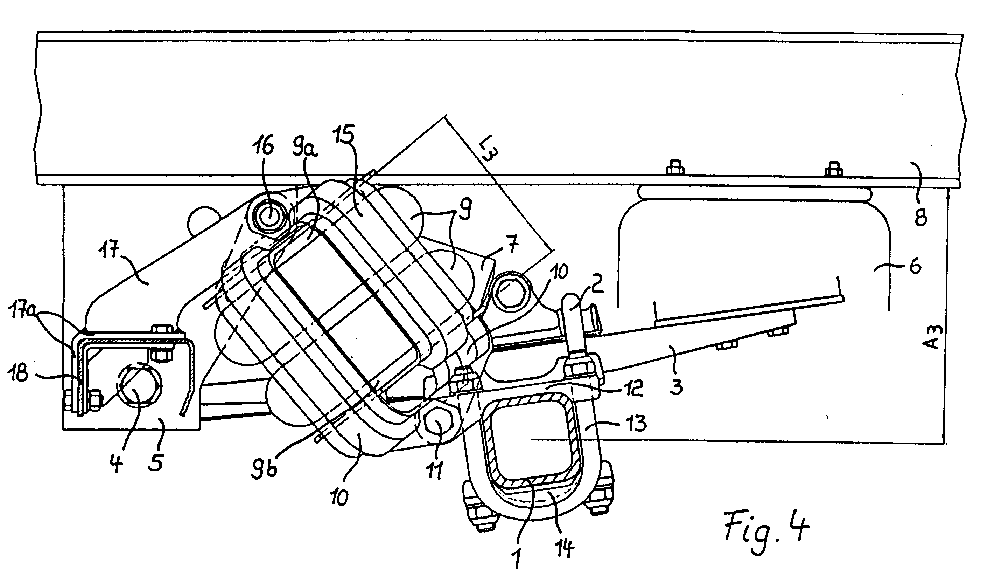

Um die voranstehend beschriebene, in Fig. 1 in der Fahrstellung und in Fig. 3 in der maximal ausgefederten Stellung gezeichnete Luftfederachse in die in Fig. 4 dargestellte Stellung anheben zu können, ist ein Achslift vorgesehen, der bei allen drei Ausführungsbeispielen eine zusätzliche Luftfeder 9 in der Form eines Zweifaltenbalges umfaßt.

Diese zusätzliche Luftfeder 9 ist mit ihrer Oberseite 9a durch zwei einander gegenüberliegende Bügel 10 über einen parallel zum Achskörper 1 verlaufenden Schraubenbolzen 11 verschwenkbar an einem Halter 12 angelenkt, der seinerseits mittels eines U-förmigen Schraubenbügels 13 unter Einfügen eines Zwischenstückes 14 am Achskörper 1 befestigt ist. Diese Befestigung geht aus Fig. 1 hervor, wogegen Fig. 2 zeigt, daß der Halter 12 in der Längsmitte des Achskörpers 1 angeordnet ist.

Die Unterseite 9b der zusätzlichen Luftfeder 9 ist ebenfalls über zwei einander gegenüberliegende Bügel 15 durch einen wiederum parallel zum Achskörper 1 verlaufenden Schraubenbolzen 16 an einem Kragarm 17 angelenkt. Dieser Kragarm 17 ist mit einer Tragplatte 17a verschweißt, die in der Längsmitte eines Querträgers 18 angeschraubt ist, der im Bereich der die Längslenker 3 lagernden Konsolen 5 des Fahrzeugrahmens verläuft und der in der Draufsicht in Fig. 2 und im Schnitt in den Figuren 1,3 und 4 zu erkennen ist.

Die Fig. 1 zeigt die Luftfederachse und den Achslift in der normalen Fahrstellung, in der die Längslenker 3 etwa waagerecht verlaufen und sich zwischen der Mitte des Achskörpers 1 und der Unterseite der Längsträger 8 des Fahrzeugrahmens ein Abstand A₁ ergibt. Die jeweils an einem Ende der Längslenker 3 angeordneten Luftfedern 6 sind mit Druckluft gefüllt und stützen die Längsträger 8 über die Längslenker 3 und den Achskörper 1 auf den nicht dargestellten Rädern der Luftfederachse ab. In dieser Stellung ergibt sich eine Länge L₁ zwischen der Oberseite 9a und der Unterseite 9b der zusätzlichen Luftfeder 9, die entlüftet ist. Die einerseits mit dem Achskörper 1 und andererseits über den Kragarm 17, den Querträger 18 und die Konsolen 5 mit dem Fahrzeugrahmen verbundenen Bügel 10 und 15 können sich somit relativ zueinander unter Zusammendrücken bzw. Auseinanderziehen des Zweifaltenbalges der zusätzlichen Luftfeder 9 bewegen, ohne die Relativbewegungen zwischen dem Fahrzeugrahmen und dem Achskörper 1 zu behindern.

In der in Fig. 3 dargestellten ausgefederten Stellung, d.h. dem größten Abstand A₂ des Achskörpers 1 relativ zum Fahrzeugrahmen ergibt sich die kürzeste Länge L₂ für den Zweifaltenbalg der zusätzlichen Luftfeder 9.

Wenn die Luftfederachse zwecks Abheben ihrer Räder von der Fahrbahn in die in Fig. 4 dargestellte Stellung angehoben werden soll, werden die beiden Luftfedern 6 entlüftet und stattdessen die zusätzliche Luftfeder 9 mit Druckluft aus der Druckluftanlage des Fahrzeuges beaufschlagt. Hierdurch erhält der Zweifaltenbalg der zusätzlichen Luftfeder 9 seine maximale Länge L₃, wodurch die an der Oberseite 9a der zusätzlichen Luftfeder 9 angreifenden Bügel 10 in Richtung auf den am Kragarm 17 angeordneten Schraubenbolzen 16 verschoben werden. Da die Bügel 10 hierbei über ihren Schraubenbolzen 11 und den Halter 12 den Achskörper 1 mitnehmen, erfolgt insgesamt eine Verschwenkung der Luftfederachse in die in Fig. 4 gezeichnete Stellung, in der die nicht dargestellten Räder der Luftfederachse von der Fahrbahn abgehoben sind. Da die Bügel 10 und 15 im wesentlichen auf Zug und der Zweifaltenbalg der zusätzlichen Luftfeder 9 auf Druck beansprucht werden, stellt der beschriebene Achslift eine konstruktiv besonders einfache, raumsparende und zuverlässig funktionierende Konstruktion dar, die außerdem außerhalb der eigentlichen Achsaufhängungen untergebracht werden kann.

Da der Bügel 10 um den Schraubenbolzen 11 relativ zum Achskörper 1 und der Bügel 15 um den Schraubenbolzen 16 relativ zum Kragarm 17 und damit zum Längsträger 8 des Fahrzeugrahmens verschwenkbar gelagert ist, sind geeignete Mittel vorgesehen, um die in Längsrichtung der Luftfeder 9 relativ zueinander beweglichen Bügel 10 und 15 gegen Ausknicken zu führen. Hierdurch wird die Gefahr einer Beschädigung der Luftfeder 9 beseitigt und die Funktionsfähigkeit des Achsliftes garantiert.

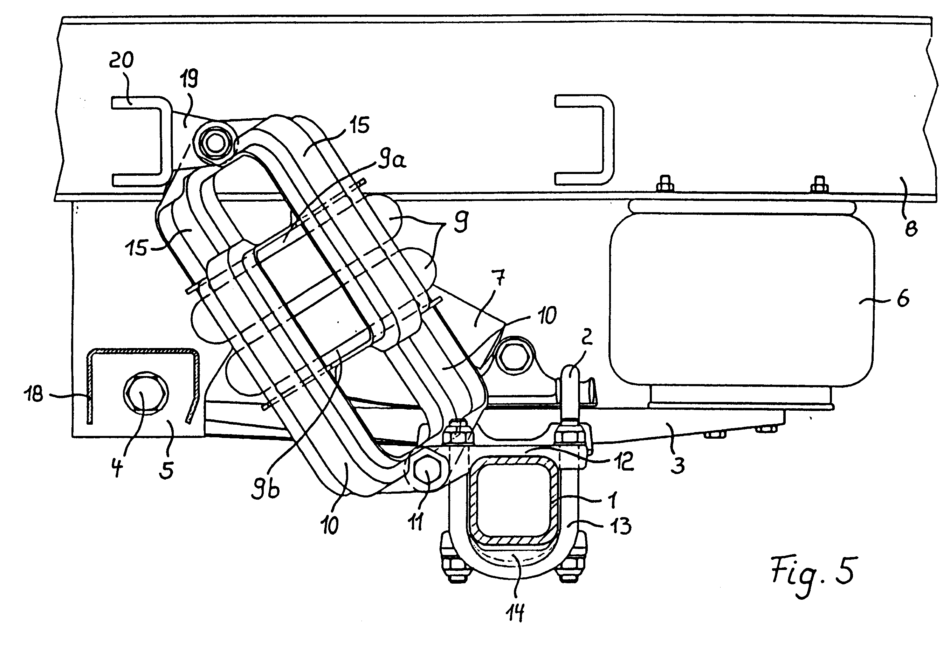

Der ebenfalls in der Fahrstellung der Luftfederachse dargestellte Achslift nach Fig. 5 unterscheidet sich von dem voranstehend beschriebenen Ausführungsbeispiel lediglich dadurch, daß der obere Schraubenbolzen 16 der Bügel 15 nicht an einem Kragarm, sondern über ein Lagerstück 19 unmittelbar an einem im Bereich der Längsträger 8 des Fahrzeugrahmens verlaufenden Querträger 20 gelagert ist. Hinsichtlich des Aufbaus und der Wirkungsweise entspricht diese zweite Ausführungsform der zuerst beschriebenen Konstruktion.

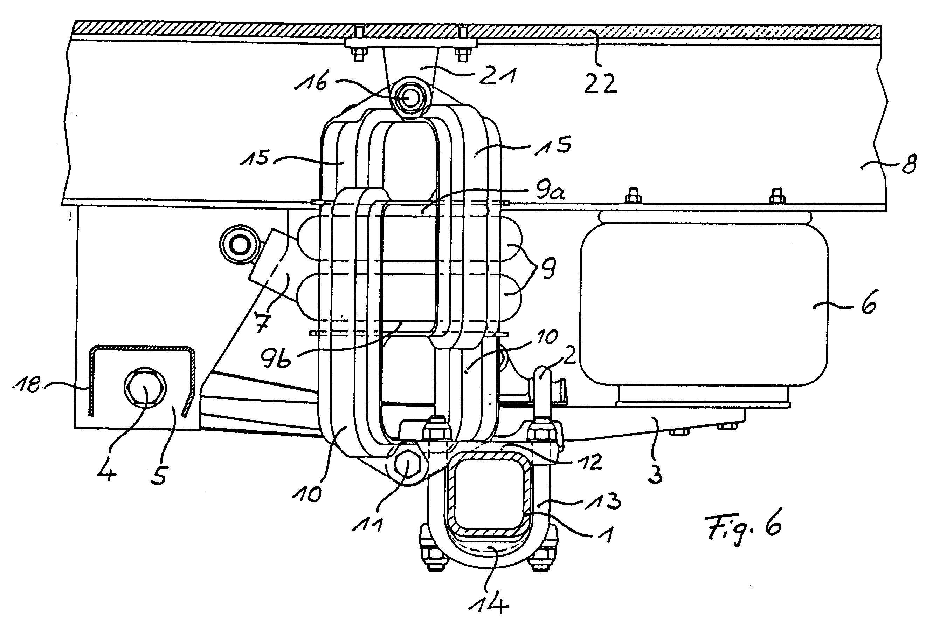

Auch hinsichtlich der dritten Ausführungsform nach Fig. 6 ergeben sich keine Änderungen hinsichtlich Aufbau und Wirkungsweise des Achsliftes. Bei dieser Ausführungsform ist der obere Schraubenbolzen 16 über ein Lagerstück 21 am Fahrzeugboden 22 angeordnet. Mit dieser Anordnung kann eine etwa senkrechte Ausrichtung der zusätzlichen Luftfeder 9 in der in Fig. 6 gezeichneten Fahrstellung der Luftfederachse verbunden sein.

## Patentansprüche

1. Achslift für luftgefederte Fahrzeugachsen, deren Achskörper (1) an zwei Längslenkern (3) befestigt ist, deren eines Ende verschwenkbar am Fahrzeugrahmen, vorzugsweise über jeweils eine Konsole, angelenkt und deren anderes Ende über eine Luftfeder (6) mit dem Fahrzeugrahmen verbunden ist, mit mindestens einer zusätzlichen Luftfeder (9), durch deren Beaufschlagen mit Druckluft bei gleichzeitiger Entlüftung der beiden den Achskörper am Fahrzeugrahmen abstützenden Luftfedern (6) der Achskörper (1) anhebbar ist,
**dadurch gekennzeichnet,**
daß die zusätzliche Luftfeder (9) mit ihrer Oberseite (9a) über mindestens einen Bügel (10) gelenkig mit dem Achskörper (1) und mit ihrer Unterseite (9b) über mindestens einen Bügel (15) gelenkig mit dem Fahrzeugrahmen verbindbar ist.

2. Achslift nach Anspruch 1, dadurch gekennzeichnet, daß die relativ zueinander in Längsrichtung der Luftfeder (9) beweglichen Bügel (10,15) gegen Ausknicken geführt sind.

3. Achslift nach Anspruch 1 oder 2, dadurch gekennzeichnet, daß jeweils zwei einander gegenüberliegende, an der Oberseite (9a) bzw. Unterseite (9b) der zusätzlichen Luftfeder (9) angreifende und sich kreuzende Bügel (10,15) angeordnet sind.

4. Achslift nach mindestens einem der Ansprüche 1 bis 3, dadurch gekennzeichnet, daß der jeweils an der Oberseite (9a) der zusätzlichen Luftfeder (9) angreifende Bügel (10) mittels eines parallel zum Achskörper (1) verlaufenden Schraubenbolzens (11) verschwenkbar mit einem Halter (12) verbunden ist, der am Achskörper (1) befestigt ist.

5. Achslift nach Anspruch 4, dadurch gekennzeichnet, daß der Halter (12) mittels eines U-förmigen Schraubenbügels (13) am Achskörper (1) angeschraubt ist.

6. Achslift nach mindestens einem der Ansprüche 1 bis 5, dadurch gekennzeichnet, daß der jeweils an der Unterseite (9b) der zusätzlichen Luftfeder (9) angreifende Bügel (15) mittels eines parallel zum Achskörper (1) verlaufenden Schraubenbolzens (16) verschwenkbar am Fahrzeugrahmen gelagert ist.

7. Achslift nach Anspruch 6, dadurch gekennzeichnet, daß der Schraubenbolzen (16) an einem Kragarm (17) angeordnet ist, der seinerseits an einem Querträger (18) im Bereich der die Längslenker (3) lagernden Konsolen (5) des Fahrzeugrahmens befestigt ist.

8. Achslift nach Anspruch 6, dadurch gekennzeichnet, daß der Schraubenbolzen (16) über ein Lagerstück (19) unmittelbar an einem im Bereich der Längsträger (8) des Fahrzeugrahmens verlaufenden Querträger (20) angeordnet ist.

9. Achslift nach Anspruch 6, dadurch gekennzeichnet, daß der Schraubenbolzen (16) über ein Lagerstück (21) im Bereich des Fahrzeugbodens (22) am Fahrzeugrahmen angeordnet ist.

10. Achslift nach mindestens einem der Ansprüche 1 bis 9, dadurch gekennzeichnet, daß eine zusätzliche Luftfeder (9) zwischen den Längslenkern (3) des Achskörpers (1) angeordnet ist.

11. Achslift nach mindestens einem der Ansprüche 1 bis 10, dadurch gekennzeichnet, daß die zusätzliche Luftfeder (9) mit einem Zweifaltenbalg ausgeführt ist.

## Claims

1. Axle lift for pneumatically suspended vehicle axles, the axle body (1) of which is fastened to two longitudinal links (3), one end of which is pivotably linked to the vehicle frame preferably via a bracket in each case and the other end of which is connected to the vehicle frame via a pneumatic spring (6), having at least one additional pneumatic spring (9), to which the admission of compressed air with simultaneous venting of the two pneumatic springs (6) supporting the axle body on the vehicle frame enables the axle body (1) to be lifted, characterized in that the additional pneumatic spring (9) can be connected with its top side (9a) to the axle body (1) in an articulated manner via at least one stirrup (10) and with its bottom side (9b) to the vehicle frame in an articulated manner via at least one stirrup (15).

2. Axle lift according to Claim 1, characterized in that the stirrups (10, 15) movable relative to one another in the longitudinal direction of the pneumatic spring (9) are guided in such a way as to prevent buckling.

3. Axle lift according to Claim 1 or 2, characterized in that in each case two crossing stirrups (10, 15) are arranged opposite one another and acting on the top side (9a) and bottom side (9b) respectively of the additional pneumatic spring (9).

4. Axle lift according to at least one of Claims 1 to 3, characterized in that the stirrup (10) acting in each case on the top side (9a) of the additional pneumatic spring (9) is pivotably connected to a holder (12) by means of a screw bolt (11) running parallel to the axle body (1), which holder (12) is fastened to the axle body (1).

5. Axle lift according to Claim 4, characterized in that the holder (12) is screwed to the axle body (1) by means of a U-shaped screw clip (13).

6. Axle lift according to at least one of Claims 1 to 5, characterized in that the stirrup (15) acting in each case on the bottom side (9b) of the additional pneumatic spring (9) is pivotably mounted on the vehicle frame by means of a screw bolt (16) running parallel to the axle body (1).

7. Axle lift according to Claim 6, characterized in that the screw bolt (16) is arranged on a cantilever (17) which in turn is fastened to a cross-member (18) in the region of the vehicle-frame brackets (5) supporting the longitudinal links (3).

8. Axle lift according to Claim 6, characterized in that the screw bolt (16) is arranged via a support piece (19) directly on a cross-member (20) running in the region of the longitudinal members (8) of the vehicle frame.

9. Axle lift according to Claim 6, characterized in that the screw bolt (16) is arranged on the vehicle frame via a support piece (21) in the region of the vehicle floor (22).

10. Axle lift according to at least one of Claims 1 to 9, characterized in that an additional pneumatic spring (9) is arranged between the longitudinal links (3) of the axle body (1).

11. Axle lift according to at least one of Claims 1 to 10, characterized in that the additional pneumatic spring (9) is constructed with twin bellows.

## Revendications

1. Dispositif de levage pour essieux de véhicules à suspension pneumatique dont les corps d'essieu (1) sont fixés à deux bras oscillants longitudinaux (3) dont l'une des extrémités est articulée de manière pivotante au châssis du véhicule, de préférence par l'intermédiaire d'une console, et dont l'autre extrémité est reliée au châssis du véhicule par un coussin d'air (6), comprenant au moins un coussin d'air supplémentaire (9) dont l'alimentation en air comprimé simultanée à une purge d'air des deux coussins d'air (6) servant d'appui au corps d'essieu sur le châssis du véhicule permet de lever le corps d'essieu (1), caractérisé en ce que le coussin d'air supplémentaire (9) peut être articulé, par sa face supérieure (9a), au corps d'essieu (1) par l'intermédiaire d'au moins un étrier (10) et, par sa face inférieure (9b), au châssis du véhicule par l'intermédiaire d'au moins un étrier (15).

2. Dispositif de levage pour essieux selon la revendication 1, caractérisé en ce que les étriers (10, 15) mobiles l'un par rapport à l'autre dans le sens longitudinal du coussin d'air (9) sont guidés sans flambage.

3. Dispositif de levage pour essieux selon la revendication 1 ou 2, caractérisé en ce qu'il est prévu deux étriers (10, 15) qui se font face, qui prennent appui sur la face supérieure (9a) et, respectivement, la face inférieure (9b) du coussin d'air supplémentaire (9) et qui se croisent.

4. Dispositif de levage pour essieux selon au moins une des revendications 1 à 3, caractérisé en ce que l'étrier (10) prenant appui sur la face supérieure (9a) du coussin d'air supplémentaire (9) est fixé pivotant, au moyen d'un boulon fileté (11) parallèle au corps d'essieu (1), à un support (12) fixé au corps d'essieu (1).

5. Dispositif de levage pour essieux selon la revendication 4, caractérisé en ce que le support (12) est vissé au corps d'essieu (1) au moyen d'un étrier à vis en U (13).

6. Dispositif de levage pour essieux selon au moins une des revendications 1 à 5, caractérisé en ce que l'étrier (15) prenant appui sur la face inférieure (9b) du coussin d'air supplémentaire (9) est fixé pivotant au châssis du véhicule au moyen d'un boulon fileté (16) parallèle au corps d'essieu (1).

7. Dispositif de levage pour essieux selon la revendication 6, caractérisé en ce que le boulon fileté (16) est logé dans un bras en porte-à-faux (17) qui, pour sa part, est fixé à une traverse (18) dans la zone des consoles (5) qui appartiennent au châssis du véhicule et qui supportent les bras oscillants longitudinaux (3).

8. Dispositif de levage pour essieux selon la revendication 6, caractérisé en ce que le boulon fileté (16) est fixé, par l'intermédiaire d'une pièce de support (19), directement à une traverse (20) s'étendant dans la zone des longerons (8) du châssis du véhicule.

9. Dispositif de levage pour essieux selon la revendication 6, caractérisé en ce que le boulon fileté (16) est fixé au châssis du véhicule par l'intermédiaire d'une pièce de support (21) située dans la zone du plancher (22) du véhicule.

10. Dispositif de levage pour essieux selon au moins une des revendications 1 à 9, caractérisé en ce qu'un coussin d'air supplémentaire (9) est disposé entre les bras oscillants longitudinaux (3) du corps d'essieu (1).

11. Dispositif de levage pour essieux selon au moins une des revendications 1 à 10, caractérisé en ce que le coussin d'air supplémentaire (9) comporte un soufflet à deux plis.
